# EUROPEAN PATENT SPECIFICATION

(11) **EP 1 832 729 B1**
(45) Date of publication and mention of the grant of the patent: **19.09.2007**
(21) Application number: 06022843.4
(22) Date of filing: 02.11.2006
(51) Int. Cl.: F01N 3/28

(54) **Fiber sheet member and exhaust gas purifying device using the same as a support mat**
Faserschichtbauteil und Abgasreinigungsvorrichtung beinhaltend dieses als Lagermatte
Feuille de fibres et dispositif de purification des gaz d'échappement comprenant celle-ci comme mat de support

(30) Priority: 10.03.2006 JP 2006066517; 21.08.2006 JP 2006224032
(43) Date of publication of application: 12.09.2007
(73) Proprietor: IBIDEN CO., LTD., Ogaki Gifu 503-8604 (JP)
(72) Inventor: Okabe, Takahiko, Ogaki Gifu Pref. 503-8559 (JP)
(74) Representative: HOFFMANN EITLE

(56) References cited:
- EP-A2- 1 326 012
- JP-A- 7 286 514
- JP-A- 2002 173 875
- US-A1- 2004 234 428

## Description

### BACKGROUND OF THE INVENTION

### 1. Field of the Invention

This invention generally relates to a sheet member including inorganic fibers and an exhaust gas purifying device of vehicles using such sheet member as a holding sealer.

### 2. Description of the Related Art

The number of cars has been greatly increasing since the beginning of this century, and the amount of exhaust gas from car engine rooms has been increasing amazingly along with the number of cars. Especially, various materials in the exhaust gas from diesel engines trigger environmental pollution, so that these materials are seriously affecting the global environment currently.

Under this circumstance, various exhaust gas processing devices have been suggested, and these have been used practically. A typical exhaust gas processing device has a casing (metallic shell) on a exhaust pipe connected to a exhaust gas manifold of the engine room, in which casing an exhaust gas processing body having lots of small holes is arranged thereon. As an example of the exhaust gas processing body, there are a catalyst carrier and a diesel particulate filter (DPF). For example, in the case of a DPF, particles are trapped by walls around holes during the exhaust gas passing through the exhaust gas processing body based on the above structure, and thereby particles can be removed from the exhaust gas. Constituting materials of the exhaust gas processing body are metals, alloys, ceramics, etc. As a typical example of the exhaust gas processing body comprising ceramics, a honeycomb filter made of cordierite is known. Recently, from the viewpoint of heat resistance, mechanical strength, chemical stability, etc., a porous silundum sintered body is used as the exhaust gas processing body.

Usually, the holding sealer is placed between the above exhaust gas processing body and the metallic shell. The holding sealer is used for protecting against breakage due to contact of the exhaust gas processing body with the metallic shell during vehicle runs, and for protecting against leakage of the exhaust gas from a gap between the metallic shell and the exhaust gas processing body. Also, the holding sealer plays an important role in preventing the exhaust gas processing body from falling off due to exhaust pressure of the exhaust gas. Moreover, the exhaust gas processing body needs to maintain high temperature for stabilizing the reaction, and the holding sealer needs to have heat resistance. As a constituting member satisfying these requirements, there is a sheet member comprising inorganic fibers such as alumina system fiber, etc.

The sheet member is wound around at least a portion of an outer surface except an open surface of the exhaust gas processing body, then after fixing as one body with the exhaust gas processing body by means of taping, the one whole body is assembled into the exhaust gas processing device by being pressed into the metallic shell.

There are possibilities of having position gaps and space gaps on the holding sealer press-fitted in the metallic shell because the holding sealer is affected by a great shearing force due to friction between the metallic shell and inner wall when the holding sealer is being press-fitted into the metallic shell. When forming of such position gaps and space gaps are taking place, the sealability of the holding sealer will be lost and also functions of the holding sealer cannot be performed. Thus, in order to solve the above mentioned problem, a method to facilitate a press fit to a metallic shell of the holding sealer by applying a liquid lubricant to a protrusion of the holding sealer contacting the inner wall of metallic shell is proposed (see the patent document 1).

Patent Document 1: JP-A 2002-173875

US 2004/0234428 A1, on which the preamble of claim 1 is based, describes a catalyst converter having a catalyst carrier, a metal shell and a holding seal material arranged between the catalyst carrier and the metal shell. The holding seal material is formed as a sheet member having a first and a second surface facing away from each other.

### SUMMARY OF THE INVENTION

However, in the above-mentioned method, a new treatment for applying the lubricant to the surface of the holding sealer is needed, then a problem in which a manufacturing process of the holding sealer becomes complicated is raised. There is also a handling problem. That is, the lubricant applied to the holding sealer tends to bond to devices and workers when the holding sealer is treated with the lubricant. Moreover, these lubricants tend to include organic binders, but such lubricants will be released to the air by heating when the holding sealer is used as an exhaust gas purifying device. Thus, from the environmental view, it is preferable not to use such lubricants.

Currently, the diameter of inorganic fibers included in the sheet member tends to increase because of health concerns for fabricating workers. For example, it is predicted that the average fiber diameter of inorganic fibers will be changed from under 6 µm at the maximum (currently) to over 7 µm in the future. Since such incrementing of fiber diameter tends to decrease flexibility of the sheet member, the problem of position gaps taking place when press fitting the holding sealer will be more common.

Accordingly, it is a general object of the present invention to provide a sheet member which has superior fabricating ability to be put on easily in a predetermined position without surface lubricants, and also to provide an exhaust gas purifying device having such a sheet member.

In order to achieve the above-mentioned object, there is provided according to one aspect of the present invention, a sheet member including inorganic fibers in which a first and a second surface substantially facing away from each other are perpendicular to a direction of thickness of the sheet member, wherein the first surface has at least one lowest point, which can be called a reentrant, and at least one highest point, which can be called a salient; and a maximum difference between the reentrant and the salient of the first surface (a maximum unevenness difference) h is 0.4 mm≦h≦ 9 mm, is provided.

When the sheet member having the above-mentioned characteristics is placed such that the first surface contacts another member, the contacting area between the sheet member and other member becomes small due to unevenness formed on the first surface. Thereby, frictional force occurring when the sheet member is moved horizontally against the other member is reduced. Therefore, it is possible to easily handle the sheet member for positioning at a desired position by moving against the other member.

Additionally, in the sheet member according to an embodiment of the present invention, for example, the sheet member may be formed by a needling process of a laminated sheet made of inorganic fibers. In this case, the sheet member according to an embodiment of the present invention can be easily manufactured using the manufacturing techniques of conventional sheet members. Also, in the needling process, fibers are woven in the direction of the thickness of the sheet member, the thickness becomes reduced and the bulkiness of the sheet member is restricted, and the sheet member for easy handling can be provided.

Additionally, in the sheet member according to the present invention, the sheet member may comprise binders. Adhesive property between fibers can be improved by including binders, thus prevention of scattering of fibers is enabled at the time of cutting and processing of the sheet member.

Additionally, in the sheet member according to the present invention, an average diameter of the inorganic fibers may be greater than or equal to 6 µm. As described above, usually, as the average diameter of inorganic fiber increases, the handling ability of the sheet member will be decreased because there is a tendency for the flexibility of the sheet member to be decreased. However, in the sheet member according an embodiment of to the present invention, even if the sheet member has an average diameter of inorganic fibers that is more than 6-7 µm, easy handling for moving the sheet member against the other member can be performed due to the above-mentioned restraint effect on frictional force.

Additionally, in the sheet member according to an embodiment of the present invention, the inorganic fibers included in the sheet member may be a mixture of alumina and silica. Thus, insulation performance improves.

In order to achieve the above-mentioned object, there is also provided according to another aspect of the present invention, an exhaust gas purifying device comprising: an exhaust gas processing body; a holding sealer used with at least a portion of outer surfaces of the exhaust gas processing body except an open surface and; a metallic shell housing the exhaust gas processing body which body is wound around the holding sealer, wherein the holding sealer is consistent with the sheet member as claimed in any of claims 1 to 5 and; the holding sealer is arranged such that the first surface of the sheet member comes in close contact with the inner surface of the metallic shell, is provided. In such an exhaust gas purifying device, the holding sealer can be put easily into the metallic shell due to the above-mentioned effect of the sheet member. Thereby, prevention of occurring of positional gaps and spacing gaps of the holding sealer within the device is enabled.

Additionally, in the exhaust gas purifying device according to the present invention, the exhaust gas processing body may be a catalyst carrier or an exhaust gas filter. In this case, the exhaust gas purifying device is provided superior gas sealability and retentiveness for the catalyst carrier or the exhaust gas filter.

According to the present invention, it is possible to provide a sheet member which has superior fabricating ability to be put on easily at a predetermined position without adding a big change into a conventional manufacturing process. Also, by using such a sheet member as the holding sealer of an exhaust gas processing device, position gaps tend not to occur when performing press fitting into the metallic shell, and it is possible to put the holding sealer in a predetermined position of the exhaust gas processing device. Thus, the exhaust gas purifying device which has superior fabricating ability can be provided.

### BRIEF DESCRIPTION OF THE DRAWINGS

Other objects, features and advantages of the present invention will become more apparent from the following detailed description when read in conjunction with the accompanying drawings, in which:
Fig. 1 is an example of a structure of the sheet member of the present invention;
Fig. 2 is a figure of constitution of the exhaust gas processing device, in which the sheet member of the present invention is used as a holding sealer and the exhaust gas processing device is constructed;
Fig. 3 is an example of a structure of the exhaust gas purifying device of the present invention;
Fig. 4 is a conceptual view of a structure of a frictional force evaluation test apparatus;
Fig. 5 is an illustration showing a relationship between an unevenness difference of the first surface and coefficient of friction.

### DESCRIPTION OF THE PREFERRED EMBODIMENTS

Next, a description is given, with reference to the accompanying drawings, of an embodiment of the present invention.

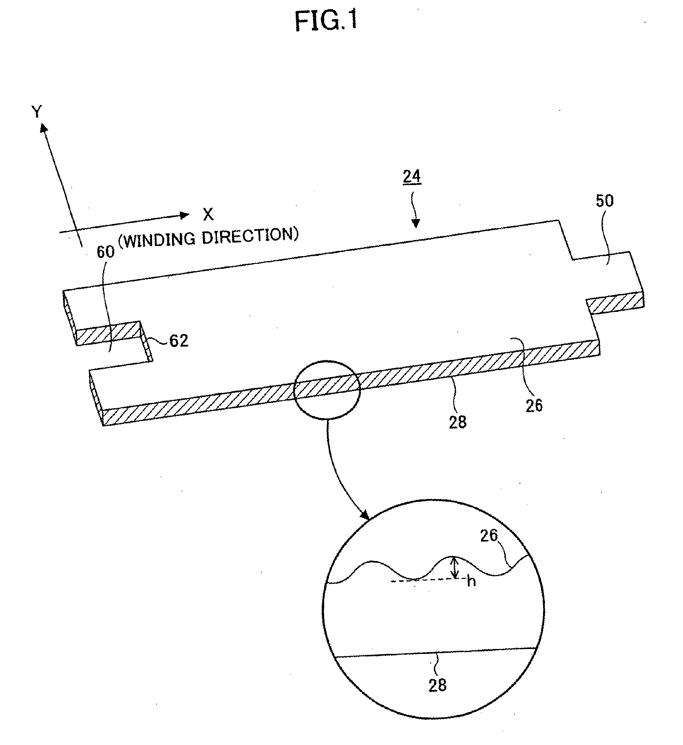

In the figure 1, an example of the sheet member 24 of the present invention is shown. The sheet member 24 includes inorganic fibers, and also has a first surface 26 and a second surface 28 which are substantially perpendicular to the direction of thickness of the sealer and are facing away from each other. As shown in the cross-sectional enlarged view in figure 1, in the sheet member of the present invention, at least the first surface 26 has unevenness. The maximum difference h between a reentrant and a salient of the first surface 26 (hereinafter, it is called the maximum unevenness difference) is 0.4 mm≦h≦9 mm.

When the sheet member 24 having such characteristics is positioned with contact between the first surface 26 and another member, the contacting area between the sheet member 24 and the other member due to the unevenness formed on the first surface 26 will be decreased; thus friction force that is generated when the sheet member 24 is moved parallel to the other member will be reduced. Therefore, it is possible to easily position the sheet member 24 in a desired position by moving the sheet member 24 relative to the other member.

Especially, when the maximum unevenness difference h is 3 mm≦h≦ 7 mm, the reduction of frictional force is further increased, as described below.

The maximum unevenness difference h of the first surface 26 of the sheet member is determined as follows. That is, pictures of magnification 12 times are taken at any position on any cross section of the sheet member 24, and in the first surface 26 within the picture, the difference between the most reentrant position and the most salient position of the sheet member 24 is determined. Next, the same measurements are performed for cross-sectional pictures taken at nine other positions of the sheet member 24, and the average value of the provided 10 values is defined as the maximum unevenness difference h of the first surface 26. Also, expressions of "the first surface" and "the second surface" are temporal expressions. Thus, when the maximum unevenness difference h is 0.4 mm≦h≦9 mm, it is necessary to be careful that both sheet member surfaces can become "the first surface".

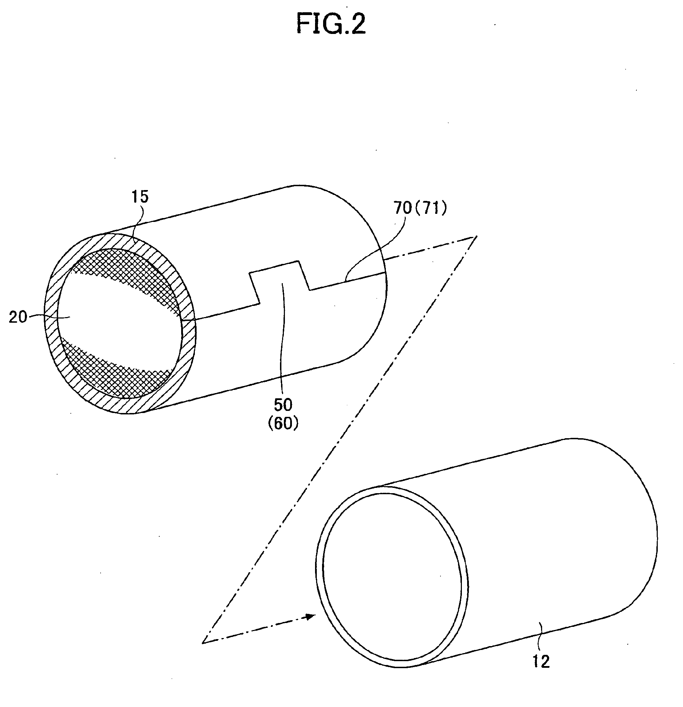

In figure 2, an illustration of assembling for manufacturing the exhaust gas processing device is shown, in which the sheet member 24 of the present invention is used as holding sealer 15 of the exhaust gas processing body 20. The sheet member 24 formed in figure 1 is used as the holding sealer 15. For example, the holding sealer 15 is wound around an outer surface of the cylindrical exhaust gas processing body 20 like a catalyst carrier, and is appropriately positioned. The holding sealer 15 has a pair of fitting salient 50 and fitting reentrant 60 at edges 70, 71 which are perpendicular to the winding direction (X direction of the figure 1). When the holding sealer 15 is wound around the exhaust gas processing body 20, the fitting salient 50 and the fitting reentrant 60 are fitted together as shown in figure 2, then the holding sealer 15 is fixed to the exhaust gas processing body 20. In this case, the holding sealer 15 is positioned such that the first surface 26 of the above sheet member 24 is facing outside. Next, one article of the holding sealer 15 and the exhaust gas processing body 20 is press fitted into the cylindrical metallic shell 12 having an inside diameter somewhat larger than the outer diameter of the exhaust gas processing body 20.

Generally, the inside diameter of the metallic shell 12 is somewhat smaller than the outer diameter of the one article for positioning the one article at a predetermined position within the metallic shell 12. Therefore, when the one article is press fitted into the metallic shell, a shearing force is placed on the outer surface of the holding sealer 15 due to the friction with the inner wall of the metallic shell 12. Thus, the position of the holding sealer 15 is moved from the predetermined position when press fitting, or a spacing gap is formed between the metallic shell 12 and the holding sealer 15.

However, when the sheet member 24 of the present invention is used as the holding sealer 15, the first surface 26 contacts the inner wall of the metallic shell 12, friction at the time of press fitting is decreased, and the one article can be put within the metallic shell 12 more easily. Therefore, the conventional problem about positional gaps and spacing gaps occurring is reduced.

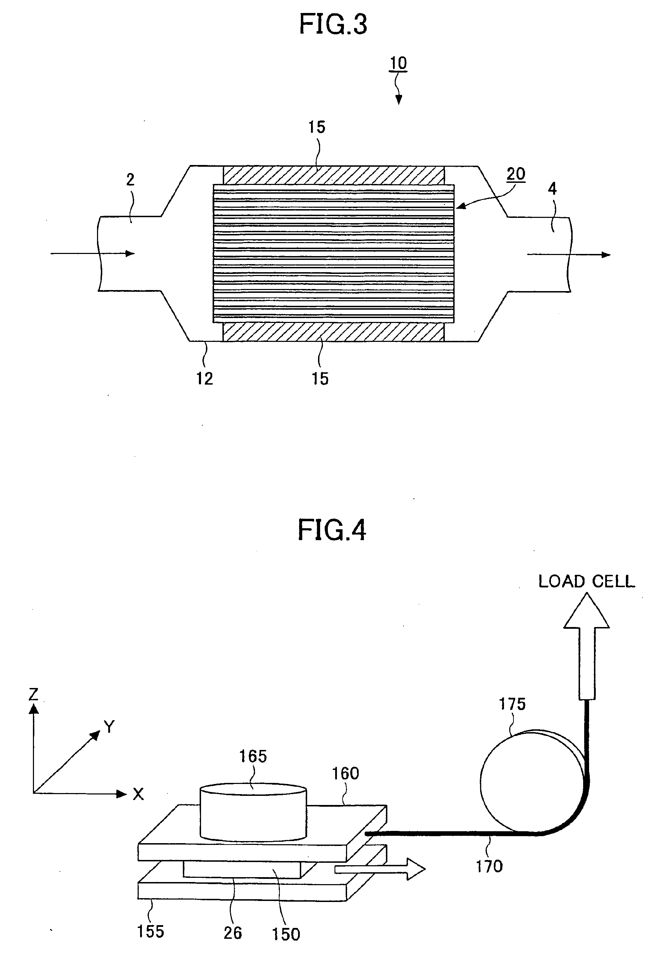

In figure 3, an example of a structure of the exhaust gas purifying device 10, in which such sheet member 24 is used as the holding sealer 15, is shown. In this figure, the exhaust gas processing body 20 is shown as a catalyst carrier having many through-holes with directions parallel to gas flow, but the exhaust gas purifying device 10 of the present invention is not limited to such a structure. For example, it is possible that the exhaust gas processing body 20 may be a DPF, in which some of the through-holes are sealed. Gas seal characteristics and the holding characteristics as opposed to the exhaust gas processing body can be improved by using the sheet member 24 in the exhaust gas purifying device 10.

One example of a manufacturing method of the sheet member of the present invention is explained below.

First, a laminated sheet comprising inorganic fibers is manufactured. In the below description, a mixture of alumina and silica as inorganic fibers can be used, but inorganic fibers are not limited to the above mixture. For example, either only alumina or silica may be used for its structure of inorganic fibers. In one example, silica sol is added to basic aluminum chloride solution (70 g/l of aluminum, Al:Cl=1.8 (atomic ratio)) so as to have 60-80:40-20 alumina : silica ratio; thereby the precursor of inorganic fibers is prepared. Especially, it is preferable that the alumina : silica ratio be 70-74 : 30-26. If the alumina is below 60%, an existence ratio of mullite produced from alumina and silica becomes low; thereby thermal conductivity of the finished sheet member increases and sufficient heat insulation can not be achieved.

Next, organic polymers such as polyvinyl alcohols are added to the precursor of alumina fibers. Then, this liquid is condensed and a spinning solution is prepared. Also, the spinning is processed with a blowing method by using the spinning solution.

The blowing method is a method for spinning by using an air flow blowing from an air nozzle and a flow of the spinning solution pushed out from a supply nozzle of the spinning solution. Gas speed per slit from the air nozzle is usually 40-200 m/s. Also, the diameter of a spinning nozzle is usually 0.1-0.5 mm. The amount of solution per one supply nozzle of the spinning solution is usually 1-120 ml/h, but 3-50 ml/h is preferable. In such a condition, the spinning solution pushed out from a supply nozzle of the spinning solution does not become spray (a form of fog) but spreads enough, and it is hard to be welded between fibers. Because of this, a precursor of alumina fibers in which the distribution of the diameter of fibers is narrow can be obtained by optimizing the spinning conditions.

Here, the average length of alumina fibers manufactured is longer than or equal to 250 µm, preferably. More preferably, it is longer than or equal to 500 µm. If the average length of fibers is shorter than 250 µm, fibers are not intertwined around each other enough and sufficient strength is not provided. Also, especially, the average diameter of inorganic fibers is not limited. However, it is noted that the present invention has its effect even if the average diameter of inorganic fibers is longer than or equal to 5 µm, for example, 7 µm.

The laminated sheet is manufactured by laminating the precursor for which spinning is completed. Also, the needling process is performed against the laminated sheet. The needling process is where needles are stuck into the laminated sheet and pulled off from the laminated sheet, thereby allowing the sheet to be thin. Generally, a needling machine is used for the needling process. The needling machine comprises a needle board movable back and forth along a stabbing direction of needles, and two support plates which are provided one on each side of the laminated sheet. On the needle board, lots of needles for sticking into the laminated sheet are arranged with about 100-5000 needles /100 cm², for example. Also, through-holes for needles are provided on the support plate. Therefore, the needling process is performed by sticking needles into the laminated sheet and pulling off needles from the laminated sheet that is pressed to hold the laminated sheet by means of a pair of support plates from both sides; thereby fibers which intertwine with each other in a complicated manner are oriented along the laminating direction and reinforcement for the laminating direction of the laminated sheet can be improved. Also, it is possible to control the unevenness difference of the surface of the laminated sheet by changing times of pressing contact of the needle board against the laminated sheet (that is, times for sticking needles into the laminated sheet and pulling off needles from the laminated sheet) with the needling machine. Therefore, the sheet member of the present invention which is controlled within a predetermined range of unevenness difference of the first surface can be provided easily by using the needling process. However, the control of unevenness difference of the first surface can be processed by a heat compression drying method as described below.

Then, the laminated sheet with the needling process is heated from ambient temperature, and the predetermined concentration of sheet member 24 can be obtained by continuous firing around the hottest temperature of 1250 °C.

In order to be handled easily, the sheet member which is obtained with the above process is cut into predetermined-sized pieces.

Then, it is preferable that organic binders like resin be impregnated in the sheet member which has been cut. Thereby, bulkiness of the sheet member can be controlled. Also, the handling ability of the sheet member is improved, for example, when the sheet member is used as the holding sealer of the exhaust gas purifying device, inorganic fiber are removed from the holding sealer, and thereby, it is possible to inhibit the decrease of holding ability. Moreover, hot exhaust gas is introduced into the exhaust gas purifying device which is being operated, and organic binders included in the holding sealer is disappeared with heating; thereby, the holding sealer which has been compressed is restored to the original state. Then, any spacing gaps between the metallic shell and the exhaust gas processing body can be sealed, and the holding capacity and the sealability of the holding sealer are improved.

It is preferable that the content of organic binder be between 1.0 and 10.0 weight%. If the content is less than 1.0 weight%, the reduction of inorganic fiber cannot be sufficiently prevented. Also, if the content is greater than 10.0 weight%, the sheet member cannot be flexible and it is difficult to wind the sheet member around the exhaust gas processing body.

Also, it is preferable to use epoxy resin, acrylic resin, gum-like resin and stylene resin as organic binders. For example, it is preferable to use acrylic resin (ACM), acrylnitryl-butadiene gum (NBR), stylene-butadiene gum (SBR).

The resin is impregnated in the sheet member by a flow-coater method using an aqueous dispersion prepared with the above organic binders and water. Also, any excess coated solid and water included in the sheet member are removed in the next step.

In the next step, any excess solid is removed and a drying process is performed. Removing the excess solid is processed by vacuum aspiration. Also, removing the excess water is processed by a heat compression drying method. In this method, because a pressing pressure is applied to the sheet member, the excess water can be removed and the sheet member can be made thin. The drying process is performed around 95-155 °C. If the temperature is lower than 95 9°C, the drying takes more time and production efficiency decreases. Also, if the drying temperature is higher than 155 °C, decomposition of organic binder begins to start and adhesive performance due to organic binder is lost. Also, the control of the unevenness difference of the first surface of the sheet member may be processed with this step. For example, a sheet member having the desired maximum unevenness difference on its surface can be obtained after compression drying by providing the predetermined unevenness structure on a surface contacting the surface of a press-typed sheet member used when the heat compression drying method of the sheet member is processed.

Finally, the sheet member is cut in a predetermined structure (for example, the structure shown in figure 1).

The sheet member obtained in the above method may be used as the holding sealer 15 of the exhaust gas processing body 20 of the exhaust gas purifying device 10. In this case, the holding sealer 15 is wound around the exhaust gas processing body 20 such that the first surface of the sheet member faces outside, and the fitting salient 50 and the fitting reentrant 60 at edges for joining are fitted and fixed. Within such a state, the one article of the holding sealer 15 and the exhaust gas processing body 20 is put into the metallic shell 12 which is comprised of stainless steel, etc.; thus, friction between the inner wall of the metallic shell 12 and the surface of the holding sealer 15 becomes small due to the above effect. As a result it will be easy to put the one article within the metallic shell 12, and thereby, position gaps of the holding sealer 15 will be overcome. Therefore, the exhaust gas purifying device 10 which has good sealability is manufactured.

Below, effects of the present invention are explained using embodiments.

### Embodiments

The sheet member is manufactured by the following procedures.

### Manufacturing of the sheet member

The silica sol was blended to basic aluminum chloride solution (aluminum content:70 g/l, Al/Cl=1.8 (atomic ratio)) so as to be Al₂O₃:SiO₂=72:28 in composition of alumina fibers, then the precursors of alumina fibers were formed.

Then, organic copolymers like polyvinyl alcohol were added to the precursor of alumina fibers. Also, the solution was diluted to be a spinning solution, and the spinning was performed with the blowing method using the spinning solution.

Then, folded structures of the precursor of alumina fibers were laminated, and the laminated sheet of alumina fibers was manufactured. The needling process was performed against the laminated sheet with repeated pressing contact of the needle board having needles of 80/100 cm². After the needling process, about 14.7 per cm² of needle processing traces occurred on the first surface of the sheet. After that, the obtained sheet member was continuous heated from ambient temperature to the hottest temperature 1250 °C, then the sheet member of alumina fibers having 1160 g/m² of concentration was obtained. The average diameter of alumina fibers was 5.0 µm and minimum diameter was 3.2 µm. Also, the thickness of the sheet member was 9 mm.

Also, the average diameter of fibers was measured as the following method. First, alumina fibers were put into a cylinder, and a pressure crushing process was applied at 20.6 MPa. Then, these samples were put on a filter net, and samples which passed through the filter net were assumed to be an examination body for electron microscopic observation. After gold was evaporated on a surface of the examination body, electron microscopic pictures (almost 1500x) were taken. The diameter of fibers was measured for at least 40 fibers based on the obtained pictures. This step was repeated for 5 samples and the average measured value was used as the average diameter of fibers.

### Shearing of the sheet member

The sheet member manufactured based on the above step was cut into a size of 1270 mm vertical length and 1280 mm horizontal length.

### Impregnating of organic binder

The organic binder (Acryl Latex) was impregnated into the sheet member which was cut. Acryl resin aqueous dispersion (Nippon Zeon:LX803; solid concentration 50±10%, pH 5.5-7.0) was prepared so as to be 1.0-10.0 wt% of resin concentration, then an impregnating solution is obtained. Then, the impregnating solution was impregnated into the sheet member by the flow coater method.

### Absorption of the solid

An excess solid over the predetermined amount was adhered to the sheet member after impregnating aluminum binders, then the excess solid was removed by an adsorption process (almost 3 seconds) of the solid. After this processing, an impregnated ratio of the organic binder of the sheet was 4 wt% as a result of the weighting method.

### Heat compression drying method

The heat compression drying method is performed at 95-155 °C of drying temperature using the sheet member after the absorption step. Here, the heat compression drying was performed by sandwiching the sheet member with equipment between the top and bottom. Thereby, the sheet member having average thickness of about 8 mm was obtained after processing. The sheet member obtained via the above steps is embodiment 1.

Next, by changing times of the pressing contact of the needling board against the first surface of the sheet member when performing the needling process, sheet members of embodiments 2-6 were manufactured using the same process as well as the above steps of embodiment 1, except for having the number of needle processing traces be 2.3/cm²-9.8/cm². Also, sheet members of comparative embodiments 1-3 were manufactured using the same process as well as the above steps of embodiment 1, except having the number of needle processing traces on the main surface of the sheet member be 1.0/cm², 19.6/cm² and 24.3/cm².

In table 1, the maximum unevenness difference h of the first surface of the sheet member for embodiments 1-6 and comparative embodiments 1-3 manufactured using the above-mentioned description are shown. Here, the first surface is defined as having the larger the maximum unevenness difference h for the two surfaces of each sheet member.

**TABLE 1**

| | Average fiber diameter (µm) | The number if needle processing traces (number/cm²) | Average value of unevenness difference (mm) | Frictional force (N) | Coefficient of friction of friction | results of press-fitting examination |
|---|---|---|---|---|---|---|
| embodiment 1 | 5.0 | 14.7 | 0.89 | 12 | 0.24 | good |
| | | | | 11.9(X) | 0.24 (X) | |
| embodiment 2 | 5.0 | 2.3 | 8.80 | 11.8 | 0.24 | good |
| embodiment 3 | 5.0 | 3.2 | 7.94 | 10.3 | 0.21 | good |
| embodiment 4 | 5.0 | 5.6 | 6.02 | 9.3 | 0.19 | good |
| embodiment 5 | 5.0 | 6.4 | 3.94 | 9.8 | 0.20 | good |
| embodiment 6 | 5.0 | 9.8 | 2.55 | 10.8 | 0.22 | good |
| | | | | 10.9 (X) | 0.22 (X) | |
| comparative embodiment 1 | 5.0 | 1.0 | 9.70 | 13.2 | 0.27 | much surface damages |
| comparative embodiment 2 | 5.0 | 19.6 | 0.21 | 12.9 | 0.26 | much surface damages |
| | | | | 12.9 (X) | 0.26 (X) | |
| comparative embodiment 3 | 5.0 | 24.3 | 0.10 | 13.1 | 0.27 | much surface damages |
| embodiment 7 | 7.2 | 1.9 | 8.70 | 11.3 | 0.23 | good |
| embodiment 8 | 7.2 | 2.8 | 8.19 | 9.8 | 0.20 | good |
| embodiment 9 | 7.2 | 5.2 | 6.12 | 8.8 | 0.18 | good |
| embodiment 10 | 7.2 | 6.9 | 3.81 | 9.3 | 0.19 | good |
| embodiment 11 | 7.2 | 10.6 | 1.96 | 10.5 | 0.21 | good |
| embodiment 12 | 7.2 | 15.4 | 0.92 | 11.2 | 0.23 | good |
| comparative embodiment 4 | 7.2 | 0.9 | 9.50 | 13.2 | 0.27 | much surface damages |
| comparative embodiment 5 | 7.2 | 20.3 | 0.32 | 12.5 | 0.25 | much surface damages |
| comparative embodiment 6 | 7.2 | 25.1 | 0.10 | 12.6 | 0.26 | much surface damages |

Also, by changing times of the pressing contact of the needling board against the sheet member when performing the needling process, sheet members of embodiments 7-12 having 7.2 µm average diameter of alumina fibers were manufactured using the same process as well as the above steps of embodiment 1, except having the number of needle processing traces on the first surface of the sheet member be 1.9/cm²-15.4/cm². Moreover, sheet members of comparative embodiments 4-6 having 7.2 µm average diameter of alumina fibers were manufactured using the same process as well as the above steps of embodiment 1, except having the number of needle processing traces on the first surface of the sheet member be 0.9/cm², 20.3/cm² and 25.1/cm². In the table 1, each of the maximum unevenness difference h of the first surface of the sheet member for these sheet members is shown. Here, the first surface of the sheet member is defined as having the larger maximum unevenness difference h for two surfaces of each sheet member.

As shown in table 1, various sheet members, in which the maximum unevenness difference h of the first surface is different, can be provided by changing the number of needle processing traces occurring due to the needling process.

Then, the following evaluation examinations were performed using samples which were cut from the obtained sheet members. Below, examination results will be explained.

Evaluation examinations of frictional force

For evaluation examinations of frictional force, samples which were cut to be 30x50 mm for each sheet member manufactured in the above-mentioned method were used. Also, a universal test machine provided with a load cell (Instron) was used in these examinations. An abstract of examinations is shown in figure 4. A sheet member sample 150 as the sample is placed on a stainless plane 155 such that X direction of figure 4 becomes longer direction of the sample 150. Here, sample 150 is placed such that the first surface 26 of sample contacts the lower stainless plane 155. Then, a load support plate 160 having a larger size (for example, 150 mm for X direction and 50 mm for Y direction) than the size of the sample 150 is placed on the sample 150 horizontally, and the weight 165 is placed on the load support plate 160. The total load of the load support plate 160 and the weight 165 is 5 kg. An upper surface of the sample 150 and an interface of the load support plate 160 which contacts the upper surface of the sample 150 are fixed with glue and so on, so they cannot be moved independently. Also, the load support plate 160 is connected to the load cell of the universal test machine via a wire 170, and the wire 170 is placed through a pulley 175 such that movement in the vertical direction of the load cell (Z direction of figure 4) is transmitted as a movement in the horizontal direction (X direction) of the load support plate 160. That is, when the load cell is moved to the upper part of figure 4, this movement is transmitted to the load support plate 160 through the wire 170 and the pulley, then the load support plate 160 and the sample 150 fixed to the load support plate 160 are subjected to a force in the horizontal direction moving to the right. Therefore, in this device, frictional force occurring when the sample 155 is moved against the lower stainless plate 155 with shearing force can be measured.

Using the above device, the load support plate 160 was pulled at 10 mm/min in the horizontal, and after the sample 150 has started to move, then an indicating value of the load cell was stable. At that time, the load value was measured. The obtained load value is defined as frictional force, and the coefficient of friction is obtained by dividing the load value with the load (5kg) on the sample 150.

In table 1, results of the coefficient of friction which are obtained for each sheet member are shown. In the table 1, two value of coefficient of friction are shown for embodiments 1, 6 and comparative embodiment 6. In this case, results of coefficient of friction indicated in (X) are values when placing the sample 150 such that the direction of needle processing traces formed on the sample 150 are perpendicular to the pulling direction. The rest of the results of coefficient of friction are values when placing the sample 150 such that the direction of needle processing traces formed on the sample 150 and the pulling direction are kept. However, comparing the respective result for both placements of embodiments 1, 6 and comparative embodiment 6, a relationship between the direction of needle processing traces formed on the sample 150 and the pulling direction does not have a remarkable influence on measurement results of coefficient of friction.

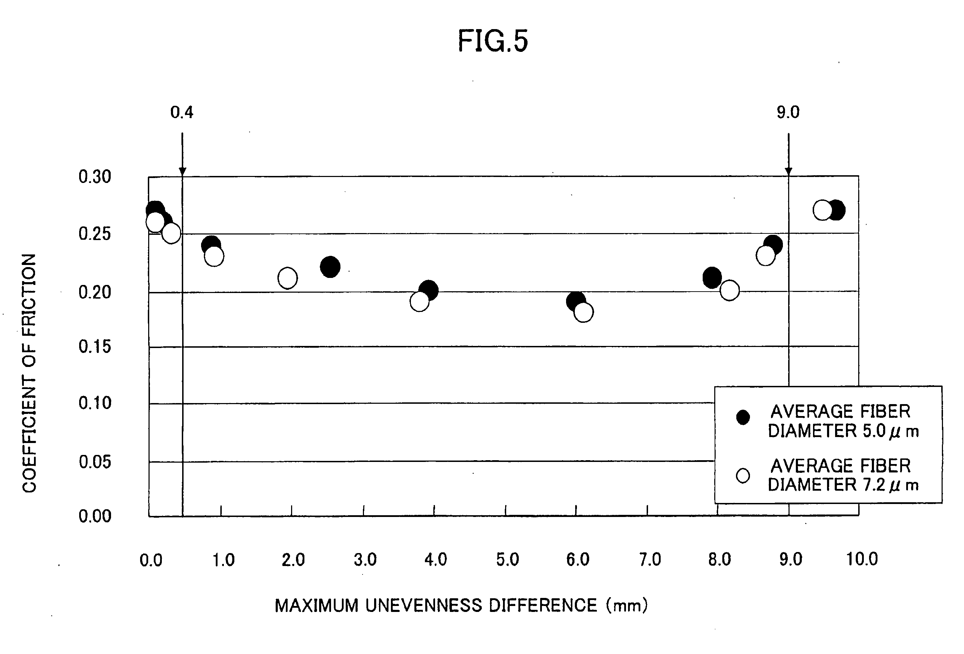

Results of the table 1 are indicated on figure 5. The horizontal axis of figure 5 is the maximum unevenness difference h of the first surface of the sheet member, and the vertical axis of figure 5 is the coefficient of friction. According to figure 5, when the maximum unevenness difference h is 0.4 mm≦h≦9 mm, coefficient of friction is about 0.18-0.24. Also, in the sheet member used generally as the holding sealer of the exhaust gas purifying device, usually, most cases are that the number of needle processing traces is about 20/cm²-25/cm². In this case, it is predicted that the maximum unevenness difference h is about 0<h≦0.3 mm based on table 1, and coefficients of friction for such sheet members are calculated to be about 0.25-0.27 based on results of comparative embodiments 2, 3, 5 and 6 of figure 1. Therefore, by adjusting the maximum unevenness difference h of the first surface between 0.4 mm≦h≦9 mm, sheet members having less frictional force than the conventional sheet members can be obtained when the sheet member is put into the metallic shell of the exhaust gas purifying device.

Also, it is recognized that even if the maximum unevenness differences h are the same, the coefficient of friction becomes somewhat reduced as the average diameter of inorganic fibers included in the sheet member increased. This is predicted as follows. That is, when the average diameter of inorganic fibers is increased, the number of fibers existing in the salient of the first surface is reduced relatively, thus a resistance against the friction in the shearing direction will be more reduced.

Also, when the maximum unevenness difference h is greater than a certain value (for example, about 6 mm), a tendency is recognized that coefficients of friction become increasing. This is predicted as follows. That is, because the sheet members having the larger maximum unevenness difference h of the first surface are manufactured with less pressing contact time of the needling board to the sheet member when performing the needling process, compression of the sheet member becomes insufficient, the salient of the first surface is crushed by contacting the other member (stainless plate), and thus its contacting area is increasing. According to these results, it is preferable that the maximum unevenness difference h of the first surface of the sheet member be 3.0 mm ≦ h≦7.0 mm.

### Evaluation examinations of press-fitting

Each sheet member manufactured in the above mentioned method is used as the holding sealer, then after these sheet members are wound around the cylindrical catalyst carrier and unified as one body, the one article was pressed into the cylindrical metallic shell and a catalyst converter was manufactured. In this time, the sheet member is placed such that the first surface of the sheet member faces outside, that is, the first surface of the sheet member contacts the inner surface of the metallic shell. Also, the spacing gap between the catalyst carrier and the metallic shell is about 3.5 mm. Next, the catalyst converter is cut in a vertical direction orthogonal to the cylindrical axis, and the surface that is the side contacting the inner surface of the metallic shell of the holding sealer was observed.

Results from each sheet member are shown in table 1. When sheet members for embodiments 1-12 were used, there was no damage to the surfaces of the sheet members after examination and they were in good condition. On the other hand, when sheet members for comparative embodiments 1-6 were used, it is recognized that there was damage like peeling off on surfaces of sheet members.

The holding sealer and the exhaust gas purifying device of the present invention are applicable to the exhaust gas purifying device for vehicles.

## Claims

1. A sheet member (24) including inorganic fibers, in which sheet member a first surface (26) and a second surface (28) substantially facing away from each other are perpendicular to a direction of thickness of the sheet member (24);
wherein the first surface (26) has at least one lowest point and at least one highest point; **characterized in that**
a maximum difference between the lowest and the highest point of the first surface (26) h is 0.4 mm≦h≦9 mm.

2. The sheet member as claimed in claim 1,
wherein the sheet member (24) is formed by a needling process of a laminated sheet made of the inorganic fibers.

3. The sheet member as claimed in claims 1 or 2,
wherein the sheet member (24) comprises binders.

4. The sheet member (24) as claimed in any of claims 1 to 3,
wherein an average diameter of the inorganic fibers is greater than or equal to 6 *µ*m.

5. The sheet member as claimed in any of claims 1 to 4,
wherein the inorganic fibers are a mixture of alumina and silica.

6. An exhaust gas purifying device (10) comprising:
an exhaust gas processing body (20);
a holding sealer (15) used with at least a portion of outer surfaces of the exhaust gas processing body (20) except an open surface; and
a metallic shell (12) housing the exhaust gas processing body (20), the holding sealer (15) being wound around the exhaust gas processing body (20);
wherein the holding sealer (15) consists of the sheet member (24) as claimed in any of claims 1 through 5, and
the holding sealer (15) is arranged such that the first surface (26) of the sheet member (24) is in close contact with an inner surface of the metallic shell (12).

7. The exhaust gas purifying device as claimed in claim 6,
wherein the exhaust gas processing body (20) is a catalyst carrier or an exhaust gas filter.

## Patentansprüche

1. Blattelement (24), das anorganische Fasern beinhaltet, wobei in dem Blattelement eine erste Oberfläche (26) und eine zweite Oberfläche (28), die im Wesentlichen voneinander abgewandt sind, senkrecht auf einer Richtung der Dicke des Blattelements (24) stehen;
bei dem die erste Oberfläche (26) wenigstens einen tiefsten Punkt und wenigstens einen höchsten Punkt aufweist; **dadurch gekennzeichnet, dass**
ein maximaler Unterschied zwischen dem tiefsten und dem höchsten Punkt der ersten Oberfläche (26) h 0,4 mm ≤ h ≤ 9 mm ist.

2. Blattelement nach Anspruch 1, bei dem das Blattelement (24) durch einen Nadelungsprozess einer aus den anorganischen Fasern gefertigten geschichteten Platte ausgebildet ist.

3. Blattelement nach Anspruch 1 oder 2, bei dem das Blattelement (24) Binder umfasst.

4. Blattelement nach einem der Ansprüche 1 bis 3, bei dem der durchschnittliche Durchmesser der anorganischen Fasern größer als oder gleich 6 µm ist.

5. Blattelement nach einem der Ansprüche 1 bis 4, bei dem die anorganischen Fasern eine Mischung aus Aluminiumoxid und Silica sind.

6. Abgasreinigungsvorrichtung (10) umfassend:
einen Abgasbearbeitungskörper (20);
einen Haltungsfestiger (15), der mit wenigstens einem Abschnitt äußerer Oberflächen des Abgasbearbeitungskörpers (20), abgesehen von einer offenen Oberfläche, verwendet wird; und
eine Metallhülle (12), die den Abgasbearbeitungskörper (20) unterbringt, wobei der Haltungsfestiger (15) um den Abgasbearbeitungskörper (20) gewickelt ist;
bei dem der Haltungsfestiger (15) aus einem Blattelement (24), wie in einem der Ansprüche 1 bis 5 beansprucht, besteht, und
wobei der Haltungsfestiger (15) so angeordnet ist, dass die erste Oberfläche (26) des Blattelements (24) in engem Kontakt mit einer inneren Oberfläche der Metallhülle (12) steht.

7. Abgasreinigungsvorrichtung nach Anspruch 6,
bei dem der Abgasbearbeitungskörper (20) ein Katalysatorträger oder ein Abgasfilter ist.

## Revendications

1. Élément de feuille (24) comprenant des fibres inorganiques, dans lequel élément de feuille une première surface (26) et une seconde surface (28) sensiblement tournées dans une direction opposée l'une de l'autre sont perpendiculaires au sens de l'épaisseur de l'élément de feuille (24) ;
dans lequel la première surface (26) possède au moins un point le plus bas et au moins un point le plus haut ; **caractérisé en ce que**
une différence maximum entre le point le plus bas et le point le plus haut de la première surface (26) h est 0,4 mm ≤ h ≤ 9 mm.

2. Élément de feuille selon la revendication 1,
dans lequel l'élément de feuille (24) est formé par un processus d'aiguilletage d'une feuille stratifiée constituée de fibres inorganiques.

3. Élément de feuille selon la revendication 1 ou 2,
dans lequel l'élément de feuille (24) comprend des liants.

4. Élément de feuille (24) selon l'une quelconque des revendications 1 à 3,
dans lequel un diamètre moyen des fibres inorganiques est supérieur ou égal à 6 µm.

5. Élément de feuille selon l'une quelconque des revendications 1 à 4,
dans lequel les fibres inorganiques sont un mélange d'alumine et silice.

6. Dispositif de purification de gaz d'échappement (10) comprenant :
un corps de traitement de gaz d'échappement (20) ;
un colmatant de maintien (15) utilisé avec au moins une partie des surfaces extérieures du corps de traitement de gaz d'échappement (20) excepté une surface ouverte ; et
une coque métallique (12) renfermant le corps de traitement de gaz d'échappement (20), le colmatant de maintien (15) étant enroulé autour du corps de traitement de gaz d'échappement (20) ;
dans lequel le colmatant de maintien (15) est constitué de l'élément de feuille (24) tel que défini dans l'une quelconque des revendications 1 à 5, et
le colmatant de maintien (15) est disposé de telle sorte que la première surface (26) de l'élément de feuille (24) est en contact étroit avec une surface intérieure de la coque métallique (12).

7. Dispositif de purification de gaz d'échappement selon la revendication 6,
dans lequel le corps de traitement de gaz d'échappement (20) est un support catalytique ou un filtre de gaz d'échappement.
